# EUROPEAN PATENT SPECIFICATION

(11) **EP 3 022 641 B1**
(45) Date of publication and mention of the grant of the patent: **28.02.2018**
(21) Application number: 14750835.2
(22) Date of filing: 16.07.2014
(51) Int. Cl.: G06F 3/0488, G06F 21/36

(54) **GESTURE-BASED CONTROL OF ELECTRONIC DEVICES**
GESTENBASIERTE STEUERUNG VON ELEKTRONISCHEN GERÄTEN.
CONTRÔLE DES DISPOSITIFS ÉLECTRONIQUES À BASE DE GESTES.

(30) Priority: 19.07.2013 US 201313945898
(43) Date of publication of application: 25.05.2016
(73) Proprietor: Microsoft Technology Licensing, LLC, Redmond, WA 98052 (US)
(72) Inventor: CAHILL, Jeremy, Redmond, Washington 98052-6399 (US)
(74) Representative: CMS Cameron McKenna Nabarro Olswang LLP
(86) International application number: PCT/US2014/046775
(87) International publication number: WO 2015/009773

(56) References cited:
- US-A1- 2010 060 586
- US-A1- 2010 162 169
- US-A1- 2011 163 972
- US-A1- 2012 233 571

## Description

### BACKGROUND

Today's electronic devices are typically multi-functional. For example, a smart phone can include a telephone, a music player, an email reader, a camera, and other functions. A user may access these functions using various buttons, keypads, keyboards, sliders, or other control elements.

US 2010/0060586 discloses a portable touch screen device for providing workout support. When the portable electronic device is in a user-interface locked mode of a monitoring application and playing an audio file from a playlist with a plurality of audio files, the device can detect a finger swipe gesture on the touch screen display. The device then terminates play of the audio file and depending on the direction of the swipe either initiates play of the next song in the playlist or the previous song in the playlist.

US 2011/0163972 discloses a method of activating a slide show while the device is in a user-interface locked mode by activating a slide show initiation icon. The user can also cause music player controls to be displayed by performing a different predetermined action (e.g. double tapping on the touch-sensitive display) on the device.

US 2012/0233571 discloses methods of accessing media functions from a locked screen comprising receiving an indication of entry of activation input at a user terminal while the user terminal is displaying a locked screen.

US 2010/0162169 discloses a method of providing a dynamic slider interface module for use with a touch screen device in locked or unlocked mode. In particular, the slider interface module provides a virtual slider which can be moved into one of a plurality of destinations (also referred to as a functionality option location). By moving the slider to one of the functionality option locations the functionality associated with that location is selected. In the locked mode a slider selection event may be required before other touch event input (e.g. button touches) will be received and acted upon by the underlying electronic device.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

In certain electronic devices, a user may access certain functions even when an electronic device is in a locked mode. For example, a user may start, stop, forward, rewind, or pause a media player on an electronic device by pressing certain soft buttons without unlocking the electronic device. However, the user may need to look at the electronic device to operate these soft buttons; otherwise, the media player may not respond correctly. Thus, the operation may be cumbersome or even unsafe, for example, when the user is driving.

Several embodiments of the present technology can address at least some of the foregoing drawbacks by detecting gestures in a detection zone on an electronic device and perform control functions according to the detected gestures. The detected gestures can be independent from any soft buttons, sliders, and/or other controls on the electronic device. For example, the electronic device may accept a swipe left, a swipe right, a tap, and/or other gestures to any locations in the detection zone (e.g., top half of a touchscreen). The electronic device may then control a media player, a calendar application, a social media application, a news application, an email application, a text message application, and/or other types of application based on the detected gestures. Thus, control inputs to the electronic device are not limited to only certain small input areas of the electronic device. As a result, a user may not need to look at the electronic device to control functions of the electronic device. Consequently, safety and user friendliness of the electronic device may be improved over conventional devices.

### BRIEF DESCRIPTION OF THE DRAWINGS

Figure 1 is a perspective view of an electronic device configured for gesture-based control in accordance with embodiments of the present technology.
Figure 2A is a block diagram showing computing components suitable for the electronic device of Figure 1 in accordance with embodiments of the present technology.
Figure 2B is a block diagram showing software modules suitable for the electronic device of Figure 2A in accordance with embodiments of the present technology.
Figures 3A-3C are flowcharts illustrating processes of aspects of gesture-based control of electronic devices in accordance with embodiments of the present technology.
Figures 4A-4D are example locked screens illustrating aspects of gesture-based control of electronic devices in accordance with embodiments of the present technology.

### DETAILED DESCRIPTION

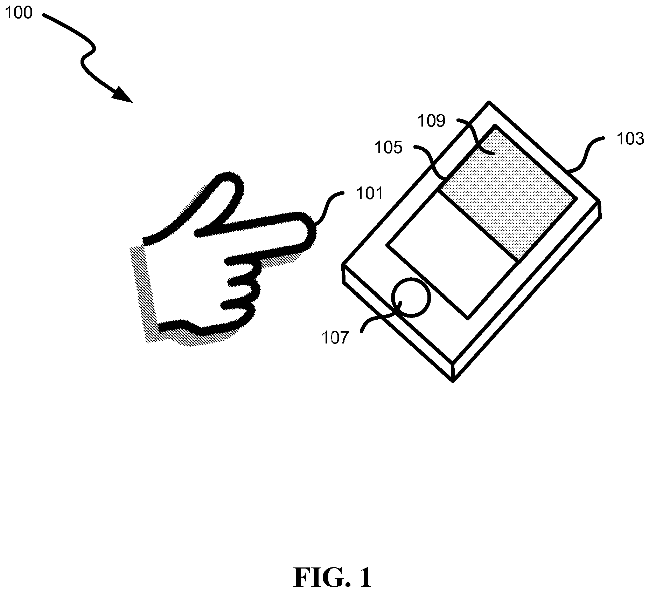

Certain embodiments of systems, devices, components, modules, routines, and processes for gesture-based control of electronic devices are described below. In the following description, example software codes, values, and other specific details are included to provide a thorough understanding of certain embodiments of the present technology. A person skilled in the relevant art will also understand that the technology may have additional embodiments. The technology may also be practiced without several of the details of the embodiments described below with reference to Figures 1-4D.

Also used herein, the term "gesture" generally refers to a form of non-verbal communication utilizing bodily actions including, for example, movements of a hand, head, finger, or another part of a user's body. An electronic device may detect gestures using, for example, one or more touchscreens, motion sensors, cameras, material deformation sensors, and/or other suitable detectors. Example gestures can include a swipe left, a swipe right, a pull down, a touch, a double touch, and/or another suitable bodily action.

Also used herein, the term a "locked mode" generally refers to an operational mode under which access to one or more functionalities of an electronic device is restricted. Examples of restricted functionalities can include one or more of application access, system configuration, data entry, system update, and/or other suitable functionalities. A user may be required to perform one or more certain actions in order to receive access to the restricted functionalities. For example, a user may be required to enter a password, use a certain combination of buttons, provide a thumb print, trace a certain pattern, complete a certain gesture, or perform other suitable actions. A user interface displayed when the electronic device is in the locked mode may be generally referred to as a "locked screen". Example locked screens may display interface elements for a time, date, email notification, alarm, and/or other suitable information.

As described above, certain electronic devices may display locked screens with soft buttons, sliders, or other control elements for forward, rewind, play, pause, or stop of a media player or other applications. As used herein, the term a "control element" generally refers to an interface element configured to accept control inputs to electronic devices. Example control elements can include soft buttons, selectors, sliders, etc. However, to operate such control elements, a user may need to look at the electronic device because input areas associated with the control elements may be limited. For example, a soft button may only have an input area of a small circle. Thus, a cumbersome or even unsafe operating environment may result in many situations, for example, when the user is driving a vehicle.

Several embodiments of the present technology can address at least some of the foregoing drawbacks by defining a detection zone on a locked screen of an electronic device. The detection zone can be associated with a target application (e.g., a media player) and configured to detect gestures for controlling the application. The detected gestures can be independent from any soft buttons, sliders, and/or other control elements on the electronic device. For example, the electronic device may detect a swipe left, a swipe right, a tap, a hover, and/or other gestures to any locations of the detection zone (e.g., top half of the screen) at the locked screen. The electronic device may then control certain functions of the media player based on the detected gestures. As a result, the user may not need to look at the electronic device to control operations of the electronic device, and thus resulting in improved usability and safety.

Figure 1 is a perspective view of an electronic device 100 configured for gesture-based control in accordance with embodiments of the present technology. The electronic device 100 can be a mobile phone, a smartphone, a personal data assistant, a tablet computer, a wearable computing or communication device, and/or other suitable computing device. As shown in Figure 1, the electronic device 100 includes a housing 103 carrying an input/output device 105 (e.g., a touchscreen) and a button 107 (e.g., a mechanical, capacitive, or resistive button). In other embodiments, the electronic device 100 can also include a front-facing camera, a rear-facing camera, a microphone, a speaker, an antenna, a keyboard, a processor, a memory, a radio transceiver, and/or other suitable electronic and/or mechanical components (not shown) in addition to or in lieu of the components shown in Figure 1.

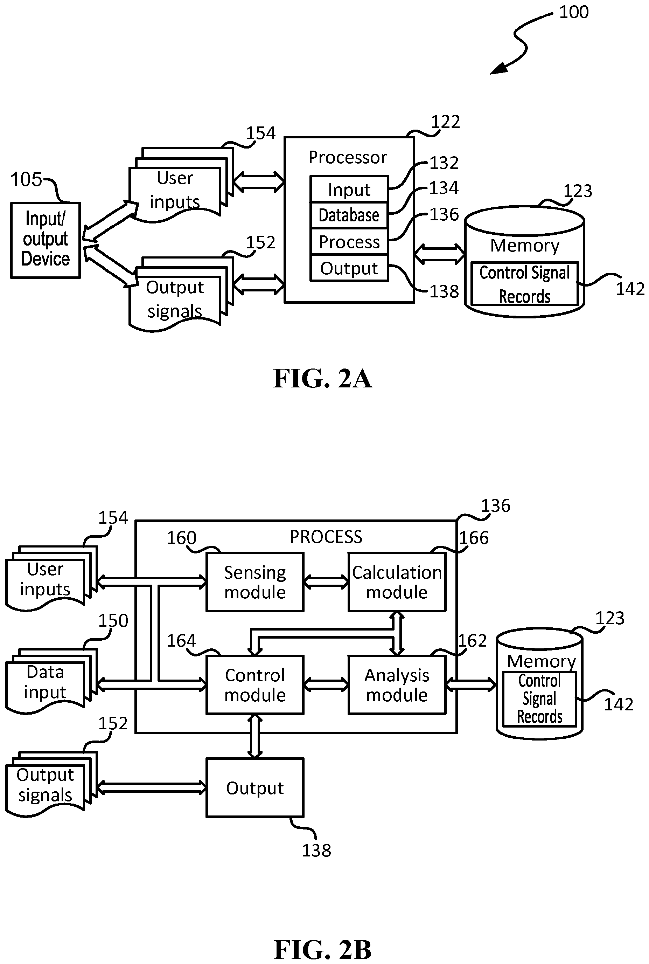

In operation, the electronic device 100 can accept user inputs via the input/output device 105 and/or the button 107 to perform certain functions when the electronic device 100 is in a locked mode. For example, in one embodiment, a user can activate control for a media player on the electronic device 100 by single or double pressing the button 107. The electronic device 100 can then define a detection zone 109 configured to detect gestures of the user's finger 101. The electronic device 100 can forward, rewind, pause, stop, or otherwise control operations for the media player based on detected gestures. In other embodiments, the user can also activate control to detect gestures for a calendar application, a social media application, a news application, an email application, a text message application, and/or other types of application on the electronic device 100 instead of or in addition to the media player. As discussed in more detail below with reference to Figures 2A and 2B, the electronic device 100 can also include a processor 122 and a memory 123 (both shown in Figure 2A) that contains instructions to facilitate the foregoing gesture-based control of the electronic device 100 and other functions of the electronic device 100.

Figure 2A is a block diagram showing computing components suitable for the electronic device 100 of Figure 1 in accordance with embodiments of the present technology. In Figure 2A and in other Figures hereinafter, individual software components, modules, and routines may be a computer program, procedure, or process written as source code in C, C++, Java, and/or other suitable programming languages. The computer program, procedure, or process may be compiled into object or machine code and presented for execution by one or more processors of a computing device. Certain implementations of the source, intermediate, and/or object code and associated data may be stored in a computer memory that includes read-only memory, random-access memory, magnetic disk storage media, optical storage media, flash memory devices, and/or other suitable computer readable storage media. As used herein, the term "computer readable storage medium" excludes propagated signals.

As show in Figure 2A, the electronic device 100 can include a processor 122 and a memory 123 operatively coupled the input/output device 105. The processor 122 can include a microprocessor, a field-programmable gate array, and/or other suitable logic device. The memory 123 can include volatile and/or nonvolatile computer readable storage media (e.g., ROM, RAM, magnetic disk storage media, optical storage media, flash memory devices, EEPROM, and/or other suitable storage media) configured to store data received from, as well as instructions for, the processor 122.

The processor 122 can be configured to execute instructions of software components stored in the memory 123. For example, as shown in Figure 2A, software components of the processor 122 can include an input component 132, a database component 134, a process component 136, and an output component 138 interconnected with one another. In other embodiments, the processor 122 may execute instructions of other suitable software components in addition to or in lieu of the foregoing software components.

In operation, the input component 132 can accept user inputs 154, for example, via the input/output device 105 and/or the button 107 (Figure 1), and communicates the detected user inputs 154 to other components for further processing. The database component 134 organizes records, including control signal records 142, and facilitates storing and retrieving of these records to and from the memory 123. The control signal records 142 may individually include a control function corresponding to a particular gesture included in the user inputs 154. For example, the control signal records 142 can include a forward, rewind, pause, and stop function individually corresponding to a swipe right, swipe left, a single touch, and a pull down for a media player, respectively. Any type of database organization may be utilized, including a flat file system, hierarchical database, relational database, or distributed database. The process component 136 analyzes the user inputs 154 from the input component 132 and/or other data sources to facilitate gesture-based control of certain functions of the electronic device 100. The output component 138 generates output signals 152 based on the analyzed user inputs 154 and optionally other data and transmits the output signals 152 to control the certain functions. Embodiments of the process component 136 are described in more detail below with reference to Figure 2B.

Figure 2B is a block diagram showing embodiments of the process component 136 in Figure 2A. As shown in Figure 2B, the process component 136 may further include a sensing module 160, an analysis module 162, a control module 164, and a calculation module 166 interconnected with one another. Each of the modules 160, 162, 164, and 166 may be a computer program, procedure, or routine written as source code in a conventional programming language, or one or more modules may be hardware modules.

The sensing module 160 can be configured to receive the user inputs 154 to a detection zone and convert the user inputs 154 into input parameters of suitable engineering units. For example, the sensing module 160 may convert the user inputs 154 into at least one of a travel distance (i.e., a length of persistent touch), a duration of persistent touch, and/or a direction of movement of the user's finger 101 (Figure 1). In another example, the sensing module 160 may convert the user inputs 154 into an interval of repeated touches and/or other suitable parameters.

The calculation module 166 may include routines configured to perform certain types of calculations to facilitate operations of other modules. In one example, the calculation module 166 can include a counter that accumulates a number of user inputs 154 that are outside of the detection zone 109 (Figure 1). In another example, the calculation module 166 can include an accumulation routine that calculates a duration of a persistent touch. In yet another example, the calculation module 166 can include a differentiation routine that calculates an acceleration of the user inputs 154 by differentiating the speed with respect to time. In further examples, the calculation module 166 can include linear regression, polynomial regression, interpolation, extrapolation, and/or other suitable subroutines. In further examples, the calculation module 166 can also include counters, timers, and/or other suitable routines.

The analysis module 162 can be configured to analyze the sensed and/or calculated user inputs 154 to determine one or more corresponding gestures. For example, in one embodiment, the analysis module 162 can compare a travel distance of one of the user inputs 154 to a predetermined threshold. If the travel distance is greater than the predetermined threshold, the analysis module 162 may indicate that the one of the user inputs 154 corresponds to one of a left swipe, a right swipe, a pull down, or another gesture. In further examples, the analysis module 162 may also determine that the user inputs 154 corresponds to a touch, a click, a double click, and/or other suitable types of gesture.

In certain embodiments, the analysis module 162 can also be configured to analyze data input 150 to determine if an application is currently running on the electronic device 100 (Figure 1). For example, in one embodiment, the analysis module 162 may receive data input 150 indicating that a media player is currently playing a song, an audio book, a video, and/or other suitable media items. The data input 150 may be provided by an operating system of the electronic device 100, or other suitable sources. In further embodiments, the application can include one of a calendar application, a social media application, a news application, an email application, a text message application, or other suitable application.

In other embodiments, the analysis module 162 may be configured to analyze the data input 150 to determine if a notification is currently displayed via the input/output device 105 (Figure 1). As used herein, a "notification" generally refers to an electronic announcement. Example notifications can include an indication of an incoming email, an incoming text message, a news bulletin, an appointment reminder, an alarm, a task-due reminder, etc. The notification may be displayed in a pop-up window, a banner, or other suitable types of interface element on the input/output device 105.

In certain embodiments, the control module 164 may be configured to define a detection zone on the input/output device 105 based on analysis results from the analysis module 162. For example, the control module 164 can define a first detection zone that is one third, one half, two thirds, or other proportions of an input area of the input/output device 105 for the determined application (e.g., a media player). In one embodiment, the control module 164 can also define one or more additional detection zones based on the determined one or more notifications. For example, in response to a determination that an incoming email notification is currently displayed, the control module 164 can define a second detection zone that is spaced apart from, abutting, or partially overlapping with the first detection zone. In another embodiment, the control module 164 may also adjust the first detection zone to accommodate the second detection zone. In further embodiments, the control module 164 may also define a third, fourth, or any other number of additional detection zones.

In certain embodiments, the control module 164 may re-position, re-shape, or otherwise manipulate the defined detection zone (or additional detection zones) in response to the number of user inputs 154 being outside of the defined detection zone. For example, the control module 164 may move the detection zone up, down, left, or right on the input/output device 105. In another example, the control module 164 may enlarge the detection zone to encompass locations associated with the previous user inputs 154. In further examples, the control module 164 may adjust both the position and the size of the detection zone to encompass locations associated with the previous user inputs 154. In other embodiments, the control module 164 may maintain the position and/or size of all the detection zones.

In certain embodiments, the control module 164 may also be configured to control operation of the electronic device 100 based on the analysis results from the analysis module 162. For example, in one embodiment, the control module 164 can perform at least one of a forward, rewind, pause, or stop to a media player on the electronic device 100 based on the detected gestures to the first detection zone. In other embodiments, the control module 164 can dismiss, read, reply, scroll, pan, acknowledge, or otherwise respond to a notification based on gestures to additional detection zones. For example, a user may stop an alarm notification by a persistent touch. In another example, the user may dismiss an email notification by a double tap in the detection zone.

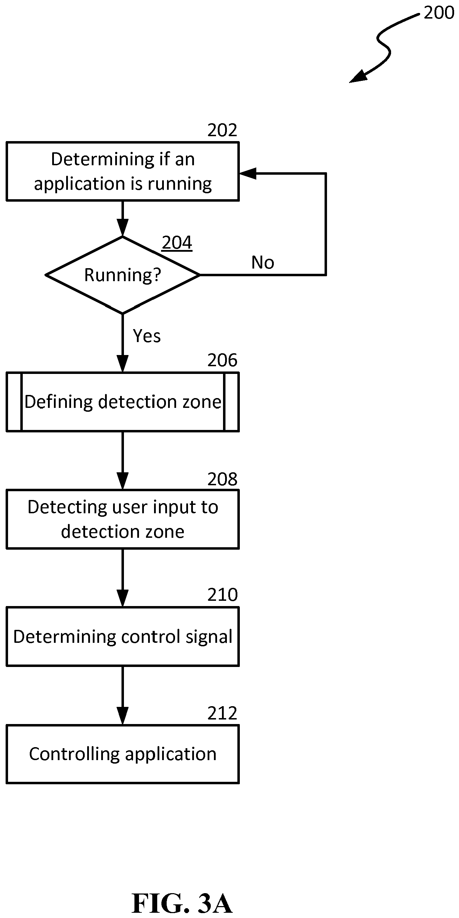

In certain embodiments, if a detected gesture traverses more than one detection zone, the control module 164 may be configured to determine which detection zone the detected gesture is related to based on certain characteristic of the detected gesture. For example, in one embodiment, if the detected gesture has a beginning portion in a first detection zone and an ending portion is a second detection zone, the control module 164 may determine that the gesture is related to the first detection zone, and vice versa. In another embodiment, if the detected gesture has a longer duration of persistent touch in the first detection zone than in a second detection zone, the control module may determine that the gesture is related to the first detection zone, and vice versa. In further embodiments, the control module 164 may perform the determination based on a trajectory length, a direction, and/or other suitable characteristics of the detected gesture. Certain operations of the sensing, calculation, control, and analysis modules 160, 162, 164, and 166 are described in more detail below with reference to Figures 3A-3C.

Figure 3A is a flowchart showing a process 200 for gesture-based control of an electronic device in a locked mode in accordance with embodiments of the present technology. Even though the process 200 is described below with reference to the electronic device 100 of Figures 1 and the software components/modules of Figures 2A and 2B, the process 200 may also be applied in other systems with additional or different hardware and/or software components.

As shown in Figure 3A, the process 200 can include determining if a target application is running when the electronic device 100 is in a locked mode at stage 202. The target application can include a media player, a calendar application, a social media application, a news application, an email application, a text message or other communication or messaging application, and/or other types of application. In one embodiment, the target application can be determined by monitoring a current status of an operating system of the electronic device 100. In another embodiment, the application can be identified by receiving an indication from the application via an application programming interface or other suitable type of interface.

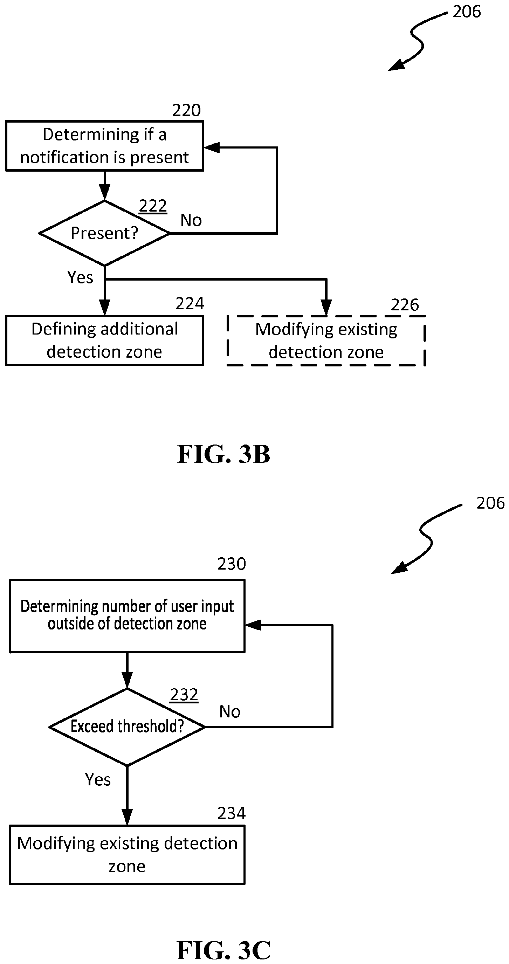

At stage 204, if the target application is not running, the process reverts to stage 202. In response to a determination that the target application is currently running, the process 200 proceeds to defining a detection zone without requiring unlocking the electronic device 100 at stage 206. The detection zone may be defined on, for example, the input/output device 105 (Figure 1) of the electronic device 100. In one embodiment, the detection zone can include a portion of an input area of the input/output device 105. The detection zone can be configured to detect user inputs of a finger, a stylus, a hand, or other suitable sources. For example, the detection zone can include a top, bottom, left, or right one third, one half, or other suitable portion of the input area. In another embodiment, the detection zone can include the entire input area. In further embodiments, the detection zone may include a volume of space proximate the electronic device 100. Several embodiments of defining the detection zone under particular operating conditions are described in more detail below with reference to Figures 3B and 3C.

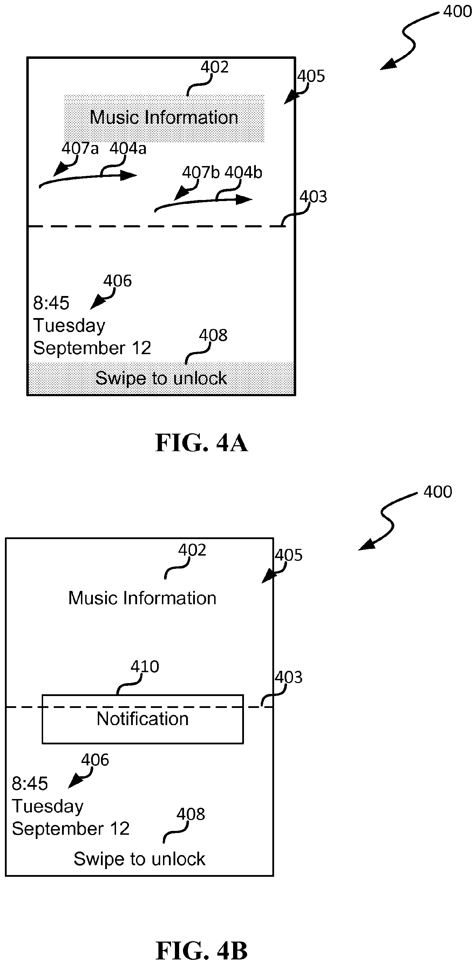

The process 200 can then include detecting user inputs to the detection zone when the electronic device 100 is in a locked mode at stage 208. In one embodiment, detecting user inputs can include detecting swipes, pull downs, or other gestures of the user's finger 101 (Figure 1) to any locations of the detection zone, not limited to only certain small input areas of the electronic device 100. Thus, user inputs detected at different locations of the detection zone may correspond to the same gesture and control function, as described in more detail below with reference to Figure 4A. User inputs outside of the detection zone may be ignored or optionally counted. As described in more detail below with Figure 3C, the optionally counted outside user inputs may be used to adjust a position and/or size of the detection zone. In another embodiment, detecting user inputs can include detecting a position or movement of the user's hand, arm, head, or whole body in the volume of space proximate the electronic device 100 using, for example, a camera. In further embodiments, the user inputs can be detected using a motion sensor or other suitable detectors.

Based on the detected user inputs, the process 200 can include determining a control signal associated with the application at stage 210. In one embodiment, determining the control signal can include determining gestures corresponding to the user inputs and correlating the gestures to the control signal based on, for example, the control signal records 142 in the memory 123 (Figure 1). For example, if the detected user inputs represent a persistent touch from left to right of the detection zone, the user inputs may be determined to be corresponding to a swipe right. The process 200 may then include correlating a swipe right to a forward, rewind, pause, or stop for a media player. In other examples, the process 200 may include correlating a swipe right to other suitable functions for other applications.

The process 200 can then include controlling the application based on the determined control signal at stage 212. For example, in response to a swipe right, a media player may be forwarded to skip a track. In another example, in response to a swipe left, a media player may rewind to a previous track. In yet another example, in response to a pull down, a media player may pause or stop. In further examples, in response to other gestures, a media player or other suitable applications may be otherwise suitably controlled.

Figure 3B is a flowchart illustrating embodiments of a process 206 for defining the detection zone in accordance with embodiments of the present technology. As shown in Figure 3B, the process 206 includes determining if a notification is present at stage 220. At stage 222, if a notification is not present, the process reverts to stage 220 to continue monitoring for a notification. In response to a notification being present, the process 206 proceeds to defining one or more additional detection zones at stage 224. In one embodiment, the additional detection zones may be defined to correspond to individual notification, notification type, or an application associated with a notification. In other embodiments, additional detection zones may be defined in other suitable manners.

Optionally, the process 206 can also include modifying existing detection zone at stage 226. For example, the electronic device 100 (Figure 1) may include a first detection zone for a media player, and a second detection zone for a notification (e.g., an incoming email). The previously defined first detection zone for the media player may be adjusted to accommodate the second detection zone. For instance, at least one of a size, shape, orientation, or other characteristics of the first detection zone may be adjusted. In other embodiments, modifying the existing detection zone may be omitted.

Figure 3C is another flowchart illustrating embodiments of a process 206 for defining a detection zone in accordance with embodiments of the present technology. As shown in Figure 3C, the process 206 includes determining a number of user inputs outside of the detection zone at stage 230. In one embodiment, user inputs are outside of the detection zone when no portion of the user inputs overlap with the detection zone. In another embodiment, user inputs are outside of the detection zone if a duration of persistent touch inside the detection zone is less than a threshold. In other embodiments, user inputs may be deemed outside of the detection zone based on other suitable criteria.

At stage 232, if the number of user inputs outside of the detection zone does not exceed a threshold, the process reverts to stage 230. In response to the number of user inputs exceeds the threshold, the process proceeds to modifying the existing detection zone at stage 234. In one embodiment, the existing detection zone may be re-positioned to be proximate at least some of the locations associated with the user inputs. In other embodiments, the existing detection zone may be enlarged to encompass all the locations associated with the user inputs. In further embodiments, the existing detection zone may be enlarged, for example, to encompass the entire screen of the input/output device 105. In further embodiments, the existing detection zone may be resized, reshaped, and/or otherwise adjusted.

Figures 4A-4D are example locked screens illustrating aspects of gesture-based control of electronic devices in accordance with embodiments of the present technology. As shown in Figure 4A, the locked screen 400 can include music information 402 for a media player, time and date 406, and a prompt 408 for unlocking the electronic device 100 (Figure 1). As discussed above, after determining that the media player is currently running, the electronic device 100 can define a detection zone 405 as marked by the dash line 403 for the media player.

The electronic device 100 can then detect user inputs to any locations in the detection zone 405, not being limited to small input areas of the electronic device 100. For example, as shown in Figure 4A, a first detected user input can correspond to a right swipe 404a at a first location 407a. A second detected user input can correspond to another right swipe 404b at a second location 407b. As shown in Figure 4A, the first and second locations 407a and 407b are spaced apart from each other. However, in response to the detected first and second right swipes 404a and 404b, the electronic device 100 may perform the same function (e.g., forward a track) related to the media player.

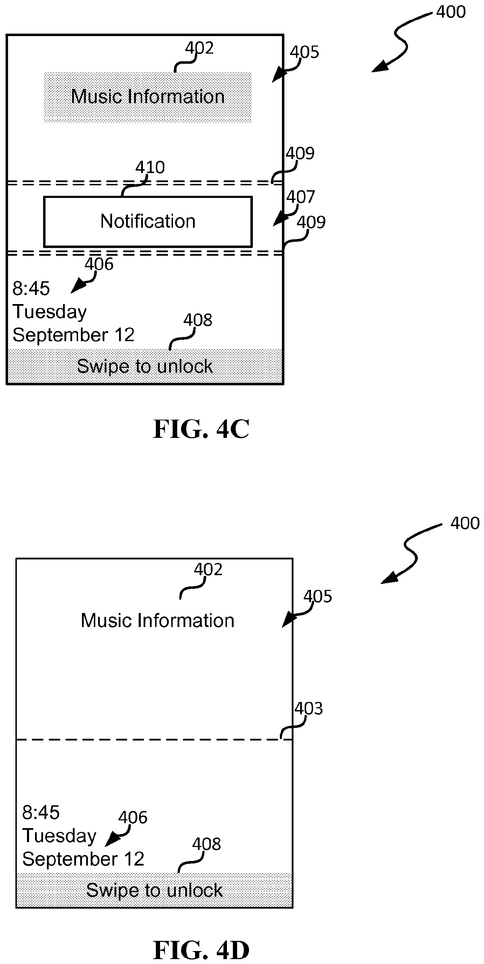

In certain embodiments, as shown in Figure 4B, while the media player is still running, the electronic device 100 may display a notification 410 (e.g., an email). As shown in Figure 4C, in response to the notification, the electronic device 100 may define an additional detection zone 407 adjacent the existing detection zone 405 (delineated by the double-dashed lines). In certain embodiments, the existing detection zone 405 may be adjusted, for example, by resizing or reshaping. In other embodiments, the existing detection zone 405 may remain unchanged. The electronic device 100 may then receive additional user inputs to the existing and/or additional detection zones 405 and 407. For example, the additional user inputs may include a double tap to dismiss the notification 410. In response, as shown in Figure 4D, the additional detection zone 407 (Figure 4C) may be eliminated, and the existing detection zone 405 may return to the original configuration.

Specific embodiments of the technology have been described above for purposes of illustration. However, various modifications may be made without deviating from the foregoing disclosure. In addition, many of the elements of one embodiment may be combined with other embodiments in addition to or in lieu of the elements of the other embodiments. Accordingly, the technology is not limited except as by the appended claims.

## Claims

1. A method performed by a processor (122) of an electronic device (100) having a touchscreen (105) coupled to the processor (122), the method comprising:
detecting an input to a first detection zone (109, 405) of the touchscreen (105) when the electronic device (100) is in a locked mode in which access to one or more functionalities of the electronic device (100) is restricted;
determining a gesture that corresponds to the detected input;
interpreting the determined gesture as a control signal to a media player on the electronic device (100), the interpretation of the determined gesture being independent of a location of the input in the first detection zone (109, 405);
controlling the media player based on the interpreted control signal; **characterised in that** the method further comprises:
determining if a notification (410) is currently displayed on the touchscreen (105); and in response to the notification (410) being currently displayed on the touchscreen (105), defining a second detection zone (407) of the touchscreen (105) for detecting an input related to the displayed notification (410) and adjusting at least one of a size, shape or orientation of the first detection zone (109, 405) to accommodate the second detection zone (407) when the electronic device (100) is in the locked mode.

2. The method of claim 1, further comprising:
determining if the media player is currently running on the electronic device (100); and
in response to the media player currently running on the electronic device (100), defining the first detection zone (109, 405) of the touchscreen (105) for detecting the input when the electronic device (100) is in the locked mode.

3. The method of claim 1, further comprising:
determining if the media player is currently running on the electronic device (100); and in response to the media player currently running on the electronic device (100), defining the first detection zone (109, 405) of the touchscreen (105) for detecting the input when the electronic device (100) is in the locked mode, the defined detection zone (109, 405) including a portion of an input area of the touchscreen (105).

4. The method of claim 1, further comprising:
determining if the media player is currently running on the electronic device (100); and
in response to the media player currently running on the electronic device (100), defining the first detection zone (109, 405) of the touchscreen (105) for detecting the input when the electronic device (100) is in the locked mode, the defined detection zone including substantially an entire screen area of the touchscreen (105).

5. The method of claim 1 wherein:
the gesture is a first gesture;
the control signal is a first control signal; and
the method further includes:
in response to the notification (410) being currently displayed on the touchscreen (105),
detecting an input to the second detection zone (407) of the touchscreen (105);
determining a second gesture corresponding to the detected input to the second detection zone (407);
interpreting the determined second gesture as a second control signal to an application related to the displayed notification (410); and
controlling the application related to the displayed notification (410) based on the interpreted second control signal.

6. The method of claim 1 wherein:
the gesture is a first gesture;
the control signal is a first control signal; and
the method further includes:
in response to the notification (410) being currently displayed on the touchscreen (105),
determining an application related to the displayed notification (410);
detecting an input to the second detection zone (407) of the touchscreen (105);
determining a second gesture corresponding to the detected input to the second detection zone (407);
interpreting the determined second gesture as a second control signal to an application related to the displayed notification; and
controlling the determined application based on the interpreted second control signal.

7. The method of claim 6 wherein the application is a calendar application, a social media application, a news application, an email application, or a text message application.

8. The method of claim 1, further comprising:
detecting inputs to the touchscreen (105);
determining if the detected inputs are in the first detection zone (109, 405) of the touchscreen (105); and
in response to the detected inputs being outside of the first detection zone (109,405),
determining a number of times the detected inputs are outside of the first detection zone (109, 405); and
in response to the determined number of times being greater than a threshold, re-positioning the first detection zone (109, 405) based on a location of the detected inputs.

9. The method of claim 1, wherein the input to the first detection zone (109, 405) is a first input to the first detection zone (109, 405) of the touchscreen (105), and the method further comprises:
detecting a second input to the first detection zone (109, 405) of the touchscreen (105) when the electronic device (100) is in a locked mode, the second input being at a different location in the first detection zone (109, 405) than the first input;
determining the detected second input to the first detection zone (109, 405) corresponds to the gesture;
interpreting the determined gesture as the control signal; and
controlling the media player based on the interpreted control signal.

10. An electronic device (100), comprising a processor (122) and a touchscreen (105) operatively coupled to the processor (122), wherein the processor (122) is configured to perform a process according to one of claims 1-9.

## Patentansprüche

1. Verfahren, das von einem Prozessor (122) einer elektronischen Vorrichtung (100) durchgeführt wird, die einen mit dem Prozessor (122) gekoppelten Touchscreen (105) aufweist, wobei das Verfahren Folgendes umfasst:
Erkennen einer Eingabe in eine erste Erkennungszone (109, 405) des Touchscreens (105), wenn sich die elektronische Vorrichtung (100) in einem gesperrten Modus befindet, in dem der Zugriff auf eine oder mehrere Funktionalitäten der elektronischen Vorrichtung (100) eingeschränkt ist;
Bestimmen einer Geste, die der erkannten Eingabe entspricht;
Interpretieren der bestimmten Geste als ein Steuersignal an einen Medienspieler auf der elektronischen Vorrichtung (100), wobei die Interpretation der bestimmten Geste unabhängig von einem Ort der Eingabe in der ersten Erkennungszone (109, 405) ist;
Steuern des Medienspielers basierend auf dem interpretierten Steuersignal;
**dadurch gekennzeichnet, dass** das Verfahren weiter Folgendes umfasst:
Bestimmen, ob eine Benachrichtigung (410) aktuell auf dem Touchscreen (105) angezeigt wird; und
als Reaktion darauf, dass die Benachrichtigung (410) aktuell auf dem Touchscreen (105) angezeigt wird, Definieren einer zweiten Erkennungszone (407) des Touchscreens (105) zum Erkennen einer Eingabe, die sich auf die angezeigte Benachrichtigung (410) bezieht, und Anpassen zumindest einer Größe, Form oder Ausrichtung der ersten Erkennungszone (109, 405), um die zweite Erkennungszone (407) aufzunehmen, wenn die elektronische Vorrichtung (100) im gesperrten Modus ist.

2. Verfahren nach Anspruch 1, weiter Folgendes umfassend:
Bestimmen, ob der Medienspieler gerade auf der elektronischen Vorrichtung (100) läuft; und
als Reaktion auf den Medienspieler, der gerade auf der elektronischen Vorrichtung (100) läuft, Definieren der ersten Erkennungszone (109, 405) des Touchscreens (105) zum Erkennen der Eingabe, wenn sich die elektronische Vorrichtung (100) in dem gesperrten Modus befindet.

3. Verfahren nach Anspruch 1, weiter Folgendes umfassend:
Bestimmen, ob der Medienspieler gerade auf der elektronischen Vorrichtung (100) läuft; und
als Reaktion auf den gerade auf der elektronischen Vorrichtung laufenden Medienspieler (100), Definieren der ersten Erkennungszone (109, 405) des Touchscreens (105) zum Erkennen der Eingabe, wenn sich die elektronische Vorrichtung (100) im gesperrten Modus befindet, wobei die definierte Erkennungszone (109, 405) einen Teil eines Eingabebereichs des Touchscreens (105) beinhaltet.

4. Verfahren nach Anspruch 1, weiter Folgendes umfassend:
Bestimmen, ob der Medienspieler gerade auf der elektronischen Vorrichtung (100) läuft; und
als Reaktion auf den Medienspieler, der gerade auf der elektronischen Vorrichtung läuft (100) Definieren der ersten Erkennungszone (109, 405) des Touchscreens (105) zum Erkennen der Eingabe, wenn sich die elektronische Vorrichtung (100) im gesperrten Modus befindet, wobei die definierte Erkennungszone im Wesentlichen einen gesamten Bildschirmbereich des Touchscreens (105) beinhaltet.

5. Verfahren nach Anspruch 1, wobei:
die Geste eine erste Geste ist;
das Steuersignal ein erstes Steuersignal ist; und
das Verfahren weiter Folgendes beinhaltet:
als Reaktion auf die Benachrichtigung (410), die gerade auf dem Touchscreen (105) angezeigt wird,
Erkennen einer Eingabe in die zweite Erkennungszone (407) des Touchscreens (105);
Bestimmen einer zweiten Geste entsprechend der erkannten Eingabe in die zweite Erkennungszone (407);
Interpretieren der bestimmten zweiten Geste als ein zweites Steuersignal für eine Anwendung, die sich auf die angezeigte Benachrichtigung bezieht (410); und
Steuern der Anwendung, die sich auf die angezeigte Benachrichtigung (410) bezieht, basierend auf dem interpretierten zweiten Steuersignal.

6. Verfahren nach Anspruch 1, wobei:
die Geste eine erste Geste ist;
das Steuersignal ein erstes Steuersignal ist; und
das Verfahren weiter Folgendes beinhaltet:
als Reaktion auf die Benachrichtigung (410), die gerade auf dem Touchscreen (105) angezeigt wird,
Bestimmen einer Anwendung, die sich auf die angezeigte Benachrichtigung bezieht (410);
Erkennen einer Eingabe in die zweite Erkennungszone (407) des Touchscreens (105);
Bestimmen einer zweiten Geste entsprechend der erkannten Eingabe in die zweite Erkennungszone (407);
Interpretieren der bestimmten zweiten Geste als ein zweites Steuersignal für eine Anwendung, die sich auf die angezeigte Benachrichtigung bezieht; und
Steuern der bestimmten Anwendung basierend auf dem interpretierten zweiten Steuersignal.

7. Verfahren nach Anspruch 6, wobei die Anwendung eine Kalenderanwendung, eine Social-Media-Anwendung, eine Nachrichtenanwendung, eine E-Mail-Anwendung oder eine Textnachrichtenanwendung ist.

8. Verfahren nach Anspruch 1, weiter Folgendes umfassend:
Erkennen von Eingaben an den Touchscreen (105);
Bestimmen, ob die erkannten Eingaben in der ersten Erkennungszone (109, 405) des Touchscreens (105) sind; und
als Reaktion darauf, dass die erkannten Eingaben außerhalb der ersten Erkennungszone liegen (109, 405),
Bestimmen einer Anzahl von Malen, die die erkannten Eingaben außerhalb der ersten Erkennungszone (109, 405) liegen; und
als Reaktion auf die bestimmte Anzahl von Malen, die größer als ein Schwellenwert ist, Neupositionieren der ersten Erkennungszone (109, 405) basierend auf einer Position der erkannten Eingaben.

9. Verfahren nach Anspruch 1, wobei die Eingabe in die erste Erkennungszone (109, 405) eine erste Eingabe in die erste Erkennungszone (109, 405) des Touchscreens (105) ist, und das Verfahren weiter Folgendes umfasst:
Erkennen einer zweiten Eingabe in die erste Erkennungszone (109, 405) des Touchscreens (105), wenn sich die elektronische Vorrichtung (100) in einem gesperrten Modus befindet, wobei sich die zweite Eingabe an einer anderen Stelle in der ersten Erkennungszone (109, 405) befindet als die erste Eingabe;
Bestimmen, dass die erkannte zweite Eingabe in die erste Erkennungszone (109, 405) der Geste entspricht;
Interpretieren der bestimmten Geste als das Steuersignal; und
Steuern des Medienspielers basierend auf dem interpretierten Steuersignal.

10. Elektronische Vorrichtung (100), einen Prozessor (122) und einen Touchscreen (105) umfassend, der betrieblich mit dem Prozessor (122) gekoppelt ist, wobei
der Prozessor (122) konfiguriert ist, um einen Prozess nach einem der Ansprüche 1-9 durchzuführen.

## Revendications

1. Procédé exécuté par un processeur (122) d'un dispositif électronique (100) ayant un écran tactile (105) couplé au processeur (122), le procédé comprenant :
la détection d'une entrée dans une première zone de détection (109, 405) de l'écran tactile (105) lorsque le dispositif électronique (100) est dans un mode verrouillé dans lequel l'accès à une ou plusieurs fonctionnalités du dispositif électronique (100) est restreint;
la détermination d'un geste qui correspond à l'entrée détectée ;
l'interprétation du geste déterminé comme un signal de commande d'un lecteur multimédia sur le dispositif électronique (100), l'interprétation du geste déterminé étant indépendante d'un emplacement de l'entrée dans la première zone de détection (109, 405);
la commande du lecteur multimédia sur la base du signal de commande interprété ;
**caractérisé en ce que** le procédé comprend en outre :
le fait de déterminer si une notification (410) est actuellement affichée sur l'écran tactile (105) ; et
en réponse au fait que la notification (410) est actuellement affichée sur l'écran tactile (105), la définition d'une seconde zone de détection (407) de l'écran tactile (105) pour détecter une entrée associée à la notification affichée (410) et le réglage d'au moins l'une parmi une taille, une forme ou une orientation de la première zone de détection (109, 405) pour loger la seconde zone de détection (407) lorsque le dispositif électronique (100) est dans le mode verrouillé.

2. Procédé selon la revendication 1, comprenant en outre :
le fait de déterminer si le lecteur multimédia fonctionne actuellement sur le dispositif électronique (100) ; et
en réponse au fait que le lecteur multimédia fonctionne actuellement sur le dispositif électronique (100),
la définition de la première zone de détection (109, 405) de l'écran tactile (105) pour détecter l'entrée lorsque le dispositif électronique (100) est dans le mode verrouillé.

3. Procédé selon la revendication 1, comprenant en outre :
le fait de déterminer si le lecteur multimédia fonctionne actuellement sur le dispositif électronique (100) ; et
en réponse au fait que le lecteur multimédia fonctionne actuellement sur le dispositif électronique (100), la définition de la première zone de détection (109, 405) de l'écran tactile (105) pour détecter l'entrée lorsque le dispositif électronique (100) est dans le mode verrouillé, la zone de détection (109, 405) définie comprenant une partie d'une région d'entrée de l'écran tactile (105).

4. Procédé selon la revendication 1, comprenant en outre :
le fait de déterminer si le lecteur multimédia fonctionne actuellement sur le dispositif électronique (100) ; et
en réponse au fait que le lecteur multimédia fonctionne actuellement sur le dispositif électronique (100),
la définition de la première zone de détection (109, 405) de l'écran tactile (105) pour détecter l'entrée lorsque le dispositif électronique (100) est dans le mode verrouillé, la zone de détection définie comprenant sensiblement une région d'écran entière de l'écran tactile (105).

5. Procédé selon la revendication 1, dans lequel :
le geste est un premier geste ;
le signal de commande est un premier signal de commande ; et
le procédé comprend en outre :
en réponse au fait que la notification (410) est actuellement affichée sur l'écran tactile (105),
la détection d'une entrée dans la seconde zone de détection (407) de l'écran tactile (105) ;
la détermination d'un second geste correspondant à l'entrée détectée dans la seconde zone de détection (407) ;
l'interprétation du second geste déterminé comme un second signal de commande d'une application associée à la notification affichée (410) ; et
la commande de l'application associée à la notification affichée (410) sur la base du second signal de commande interprété.

6. Procédé selon la revendication 1, dans lequel :
le geste est un premier geste ;
le signal de commande est un premier signal de commande ; et
le procédé comprend en outre :
en réponse au fait que la notification (410) est actuellement affichée sur l'écran tactile (105),
la détermination d'une application associée à la notification affichée (410) ;
la détection d'une entrée dans la seconde zone de détection (407) de l'écran tactile (105) ;
la détermination d'un second geste correspondant à l'entrée détectée dans la seconde zone de détection (407) ;
l'interprétation du second geste déterminé comme un second signal de commande d'une application associée à la notification affichée ; et
la commande de l'application déterminée sur la base du second signal de commande interprété.

7. Procédé selon la revendication 6 dans lequel l'application est une application de calendrier, une application de réseau social, une application d'actualités, une application de courrier électronique ou une application de SMS.

8. Procédé selon la revendication 1, comprenant en outre :
la détection d'entrées sur l'écran tactile (105) ;
le fait de déterminer si les entrées détectées sont dans la première zone de détection (109, 405) de l'écran tactile (105) ; et
en réponse au fait que les entrées détectées sont en dehors de la première zone de détection (109, 405),
la détermination d'un nombre de fois où les entrées détectées sont en dehors de la première zone de détection (109, 405) ; et
en réponse au fait que le nombre de fois déterminé est supérieur à un seuil, le repositionnement de la première zone de détection (109, 405) sur la base d'un emplacement des entrées détectées.

9. Procédé selon la revendication 1, dans lequel l'entrée dans la première zone de détection (109, 405) est une première entrée dans la première zone de détection (109, 405) de l'écran tactile (105), et le procédé comprend en outre :
la détection d'une seconde entrée dans la première zone de détection (109, 405) de l'écran tactile (105) lorsque le dispositif électronique (100) est dans un mode verrouillé, la seconde entrée étant à un autre emplacement dans la première zone de détection (109, 405) que la première entrée ;
le fait de déterminer si la seconde entrée détectée dans la première zone de détection (109, 405) correspond au geste ;
l'interprétation du geste déterminé comme le signal de commande ; et
la commande du lecteur multimédia sur la base du signal de commande interprété.

10. Dispositif électronique (100), comprenant un processeur (122) et un écran tactile (105) couplé fonctionnellement au processeur (122), dans lequel le processeur (122) est configuré pour exécuter un processus selon l'une des revendications 1 à 9.
